# EUROPEAN PATENT APPLICATION

(11) **EP 4 804 086 A1**
(43) Date of publication of application: **09.09.2026**
(21) Application number: 26150483.1
(22) Date of filing: 07.01.2026
(51) Int. Cl.: G06N 10/20

(54) **QUANTUM CIRCUIT DESIGN**

(30) Priority: 03.03.2025 US 202519069004
(71) Applicant: FUJITSU LIMITED, Kawasaki-shi, Kanagawa 211-8588 (JP)
(72) Inventor: LIU, Xiaoyuan, Santa Clara, 94054 (US); KULSHRESTHA, Ankit, Santa Clara, 94054 (US); USHIJIMA, Hayato, Santa Clara, 94054 (US)
(74) Representative: Haseltine Lake Kempner LLP

(57) **Abstract**

A method may include generating directed graphs, each of the directed graphs representing a quantum circuit. The method may also include evaluating each of the directed graphs according to operation of the quantum circuit represented by each of the directed graphs. The method may include selecting one of the directed graphs based on the evaluations. The method may further include transforming the selected directed graph to generate a second directed graph.

## Description

### FIELD

The present disclosure generally relates to quantum circuit design.

### BACKGROUND

Quantum computing devices may leverage the principles of quantum mechanics to perform computations. For example, quantum computing devices may include quantum circuits that operate using quantum bits ("qubits") capable of representing information as ones, zeroes, or as both ones and zeroes simultaneously. Quantum circuits may include a sequence of quantum logic gates configured to perform operations on qubits by manipulating the quantum states of the qubits. A quantum algorithm may be implemented by a quantum circuit as the execution of a combination of quantum logic gates in a specific order. Thus, quantum circuits may be designed to use the properties of qubits, such as superposition and entanglement, to efficiently and/or accurately perform some types of computations using quantum algorithms.

The subject matter claimed in the present disclosure is not limited to embodiments that solve any disadvantages or that operate only in environments such as those described above. Rather, this background is only provided to illustrate example technology areas where some embodiments described in the present disclosure may be practiced.

### SUMMARY

According to an aspect of an embodiment, a method may include generating directed graphs. Each of the directed graphs may represent a quantum circuit. Each of the directed graphs may be evaluated according to operation of the quantum circuit represented by each of the directed graphs. One of the directed graphs may be selected based on the evaluations. The selected directed graph may be transformed to generate a second directed graph.

The objects and advantages of the embodiments will be realized and achieved at least by the elements, features, and combinations particularly pointed out in the claims. It is to be understood that both the foregoing general description and the following detailed description are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 illustrates an example environment for quantum computing;
FIG. 2A illustrates an example directed graph;
FIG. 2B illustrates an example quantum circuit representation;
FIG. 3 illustrates an example quantum circuit design method;
FIG. 4 illustrates another example quantum circuit design method;
FIG. 5 illustrates an example operational flow of generating element modifications from a quantum circuit representation;
FIG. 6 illustrates a flowchart of an example quantum circuit design method; and
FIG. 7 illustrates a block diagram of an example computing system, all in accordance with one or more embodiments of the present disclosure.

### DETAILED DESCRIPTION

Quantum computing devices utilize principles of quantum mechanics to perform computations. For example, quantum computing devices include quantum circuits which may be configured to implement a series of quantum bit ("qubit") operations on qubits based on an arrangement of quantum logic gates. Qubits may be configured to store values of 0, 1, or a superposition of both 0 and 1. Since qubits are capable of simultaneously storing multiple values by concurrently existing in multiple quantum states, quantum computing device may be capable of performing computations more quickly and/or more accurately than classical computing devices that only use classical bits capable of storing a discrete value of either 0 or 1 at any given time. Accordingly, quantum computing devices may be used to improve computations in various technology fields such as physics, chemistry, finance, and/or machine learning. For example, quantum computing devices may improve computations related to simulation and/or optimization problems.

Current quantum computing devices are Noisy Intermediate Scale Quantum (NISQ) devices, which include quantum hardware limited to a few hundred qubits. Consequently, NISQ devices may be highly susceptible to noise. Some algorithms such as Variational Quantum Algorithms (VQAs) may attempt to overcome problems associated with noise by leveraging classical computing devices to train parameterized quantum circuits. However, parameterized quantum circuits may themselves be susceptible to issues stemming from quantum entanglement, barren plateaus, and/or noise. Quantum circuit design may be helpful in addressing present issues with quantum hardware. For example, searching for a quantum circuit design using the methods of the present application may produce a quantum circuit design with a reduced number of multi-qubit operations (e.g., CNOT gates) as compared to previous designs, which may accordingly reduce the amount of noise of the quantum circuit design.

Quantum circuit design may be difficult or impractical given the large number of different aspects of a quantum circuit that may be available to be adjusted. For example, the aspects that may be adjusted may include quantum gate placement, a number of layers, parameter initializing distribution, and/or an entanglement strategy. Automating the search process for a design of a quantum circuit may help to overcome the difficulties of traditional quantum circuit design.

Some embodiments of the present disclosure may describe a quantum circuit design method. For example, the disclosure may describe a method to generate directed graphs. In these and other embodiments, each of the directed graphs may represent a quantum circuit. Each of the directed graphs may be evaluated according to operation of the quantum circuit represented by each of the directed graphs. One of the directed graphs may be selected based on the evaluations. The selected directed graph may be transformed to generate a second directed graph. In these and other embodiments, a quantum circuit may be generated based on the second directed graph. As a result, computing processes and performance of quantum computing devices may be improved by a method of more efficiently and/or accurately designing quantum circuits according to the present disclosure.

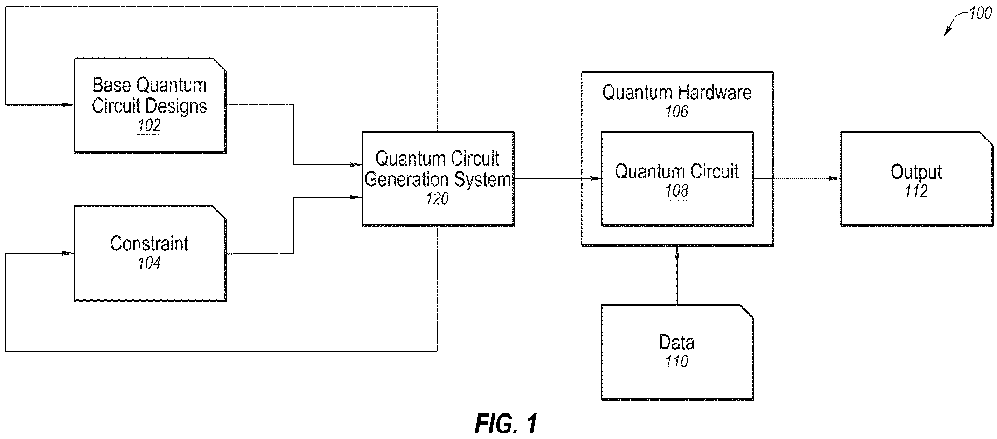

Embodiments of the present disclosure are explained with reference to the accompanying figures. FIG. 1 illustrates an example environment 100 for quantum computing according to one or more embodiments of the present disclosure. The environment 100 may include a quantum circuit generation system 120 and quantum hardware 106. The quantum circuit generation system 120 may be configured to implement a quantum circuit design method and/or to generate a quantum circuit 108 based on a quantum circuit design generated using a quantum circuit design method. The quantum circuit 108 may be implemented in the quantum hardware 106 to generate a desired output 112 given input data 110.

In general, quantum hardware 106 may operate to perform quantum computations using a quantum circuit 108 that includes a series of quantum logic gates that operate on quantum bits, e.g., qubits, of the quantum hardware 106. In general, quantum logic gates are configured to manipulate the quantum states of qubits. The quantum states of a qubit may include a basic state, a superposition state that may be represented by any point on a surface of a sphere where two opposite points on the sphere represent the basic states of 1 and 0 of the qubit, and an entangled state where the qubit state is based on the state of another qubit. The quantum states of the qubit may be adjusted. For example, a quantum gate may adjust the superposition state of the qubit by rotating the state of the qubit from a first position to a second position. In these and other embodiments, a quantum logic gate may represent an operation that may be performed on a qubit. As such, the quantum gate may be implemented by controlling the quantum hardware 106 that encodes qubits, such as by manipulating the energy levels of atoms, ions, photons, or superconducting circuits that form the quantum hardware 106. In these and other embodiments, the quantum hardware 106 may be controlled by application of electromagnetic waves, such as by a laser, microwaves, or other electromagnetic waves.

In these and other embodiments, how a quantum logic gate adjusts a qubit may be determined based on a value of a parameters of the quantum gate. For example, a quantum logic gate may be configured to adjust the superposition of a qubit. In this example, a parameter of the quantum logic gate may indicate the operator to be applied by the quantum logic gate to the qubit, such as an angle of rotation of the qubit. As another example, a quantum logic gate may be configured to adjust the strength of entanglement of one qubit with another qubit. Thus, each of the quantum gates may have one or more separate parameters that may be adjusted. The different parameters of a quantum logic gate may be implemented by adjusting one or more property of an electromagnetic wave that is applied to the quantum hardware 106. For example, an amplitude, pulse shape, duration, wavelength, or phase or other property of an electromagnetic wave may be set at a particular setting to achieve a different parameter of a quantum logic gate. For example, to rotate a qubit around a particular idealized axis a particular amount, such as 45 degrees, a microwave pulse with a particular duration may be applied to the qubit. In these and other embodiments, other properties of the microwave pulse may be set at a particular setting to help achieve the correct adjustment of the qubit. Thus, to adjust a parameter of a quantum logic gate, a property of an electromagnetic wave that may be applied to quantum hardware 106 may be adjusted.

The quantum logic gates may be organized in a specific manner to implement a quantum algorithm. For example, a quantum algorithm may be written to perform a specific task. For example, a task may be solving an optimization problem or compressing data, such as compressing image data. The task may be encoded into a quantum algorithm. The quantum algorithm may be represented by a specific set of quantum logic gates organized in a specific manner to form a quantum circuit. The quantum circuit may encode variables and operations of the quantum algorithm into a sequence of quantum logic gates that performs the quantum algorithm on data 110 using the quantum hardware 106.

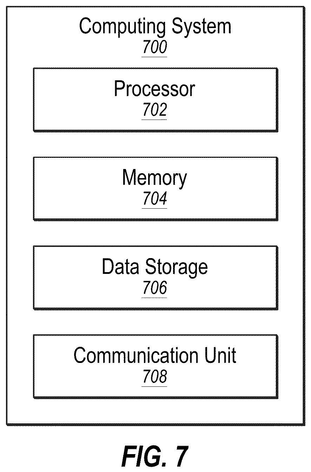

In some embodiments, the quantum circuit generation system 120 may be configured to design a quantum circuit based on a quantum algorithm. For example, the quantum circuit generation system 120 may be configured to design a quantum circuit configured to implement a quantum algorithm related to compressing data, solving optimization problems, simulating chemical/physical/biological processes and/or interactions, encrypting/decrypting data, searching databases (e.g., Grover's algorithm), and/or performing any other task. In these and other embodiments, the quantum circuit generation system 120 may be configured to generate the quantum circuit 108 using the base quantum circuit designs 102. The quantum circuit generation system 120 may be implemented using one or more processors and/or systems such as described with respect to FIG. 7.

In some embodiments, the quantum circuit generation system 120 may be configured to design a quantum circuit by generating and evaluating one or more candidate quantum circuit designs based on a task to be performed by the quantum circuit. For example, the quantum circuit generation system 120 may be configured to generate multiple candidate quantum circuit designs, such as a subset of all possible candidate quantum circuit designs given one or more parameters with particular values. In these and other embodiments, the quantum circuit generation system 120 may evaluate the candidate quantum circuit designs based on the design and select one or more of the candidate quantum circuit designs as base quantum circuit designs 102 to use as the basis for generating additional candidate quantum circuit designs. The additional candidate quantum circuit designs may be generated after adjusting a value of one or more of the parameters. The quantum circuit generation system 120 may iteratively generate and evaluate the candidate quantum circuit designs with differing values for the parameter until a final quantum circuit design is selected.

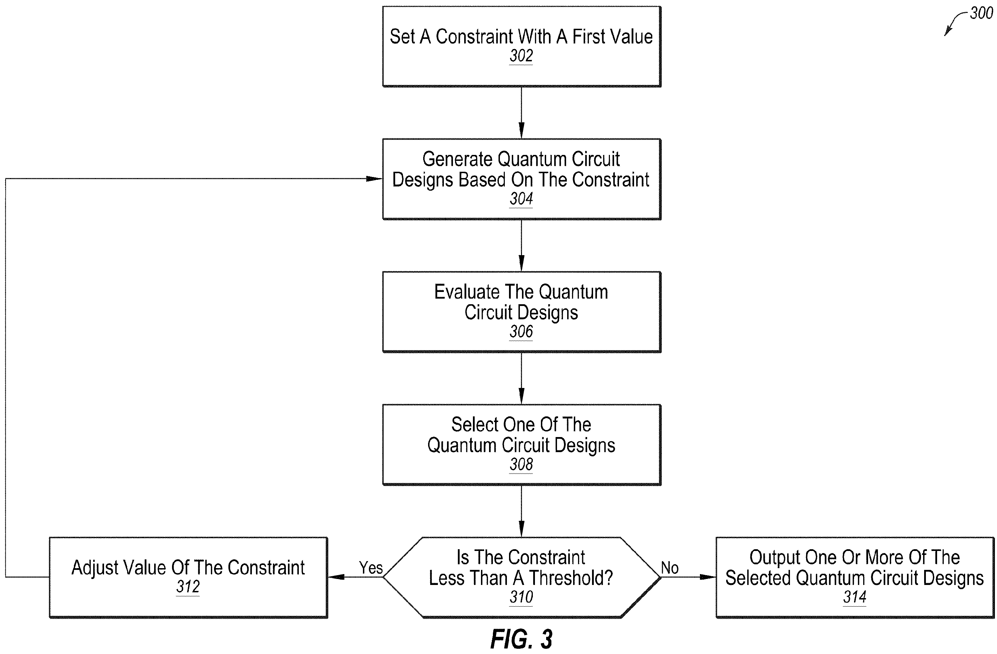

In some embodiments, the quantum circuit generation system 120 may be configured to generate the candidate quantum circuit designs given one or more constraints 104. In some embodiments, a constraint 104 may include a rule or condition that may be imposed on the design, structure, and/or behavior of a quantum circuit. In some embodiments, the constraint 104 may be decided by a user. For example, a constraint may include a threshold limit on a depth of the candidate quantum circuit designs. In these and other embodiments, the quantum circuit generation system 120 may iteratively generate and evaluate the candidate quantum circuit designs adjusting a depth of the candidate quantum circuit designs for each iteration until a depth of the candidate quantum circuit designs satisfies the threshold limit. After the depth of the quantum circuit designs satisfies the threshold limit, one or more final quantum circuit designs may be selected from the candidate quantum circuit designs generated by the quantum circuit generation system 120. The one or more final quantum circuit designs selected may be the quantum circuit designs with the best evaluations. Further details regarding the above-described method of quantum circuit design is provided with respect to FIG. 3.

As another example, the quantum circuit generation system 120 may be configured to design a quantum circuit by generating and evaluating one or more candidate quantum circuit designs based on a task to be performed by the quantum circuit. In these and other embodiments, the quantum circuit generation system 120 may obtain multiple candidate quantum circuit designs, such as through generation of candidate quantum circuit designs as described previously with respect to FIG. 1 and/or as described with respect to FIG. 3. In these and other embodiments, the quantum circuit generation system 120 may select one of the candidate quantum circuit designs and transform the selected candidate quantum circuit design. In these and other embodiments, the quantum circuit generation system 120 may transform the selected candidate quantum circuit design using an algorithm, such as a neural network.

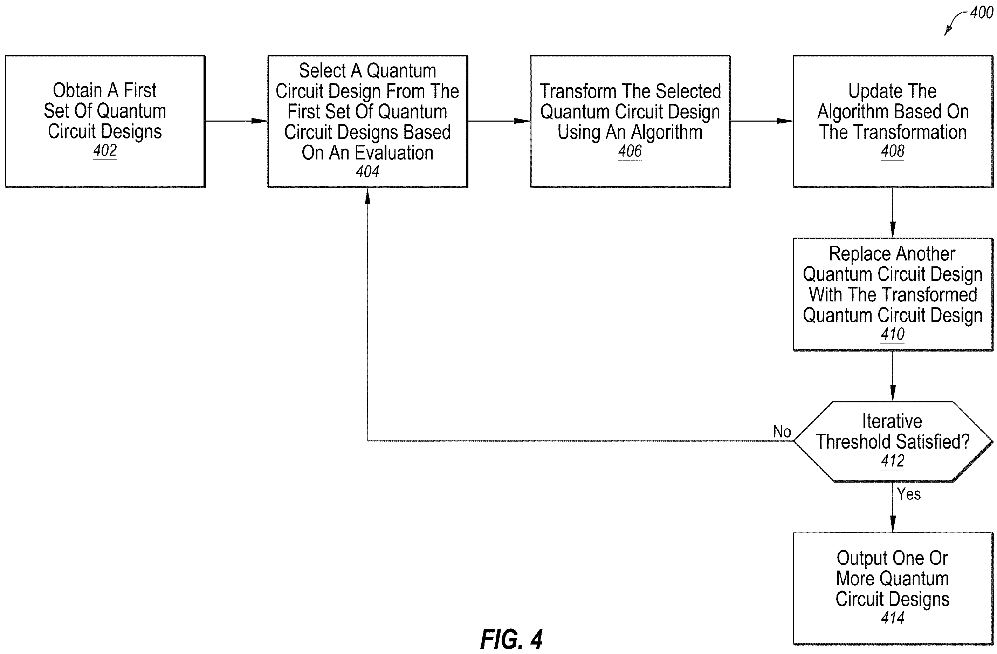

In some embodiments, the quantum circuit generation system 120 may evaluate the transformed candidate quantum circuit design and adjust the algorithm based on the evaluation. In these and other embodiments, the transformed candidate quantum circuit design may be one of the base quantum circuit designs 102. In these and other embodiments, the quantum circuit generation system 120 may iteratively adjust the obtained candidate quantum circuit designs, such as further adjusting the base quantum circuit designs 102 until a threshold number of iterations may be performed. The threshold number of iterations may be provided as the constraint 104. Further details regarding the design of a quantum circuit using an algorithm, such as a neural network, are provided with respect to FIG. 4.

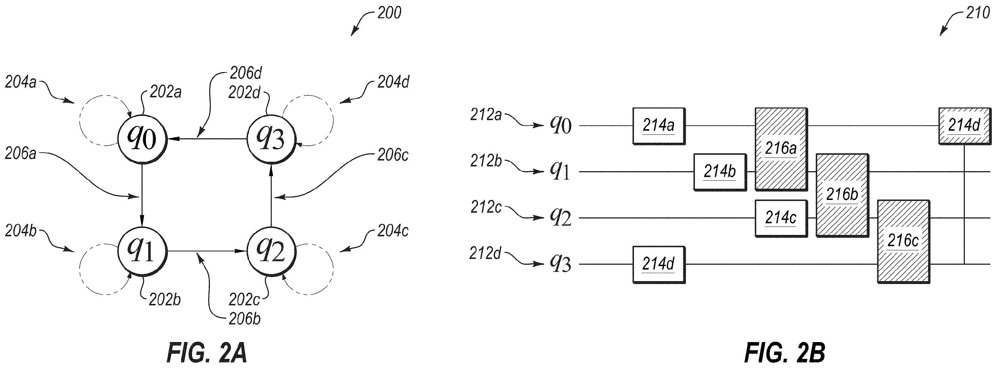

In some embodiments, the quantum circuit generation system 120 may generate the candidate quantum circuit designs using a representation of quantum circuits. In these and other embodiments, the quantum circuit representations may be data structures configured to represent quantum circuits (e.g., intermediate representations). For example, the quantum circuit representations may be directed graphs, such as the directed graph 200 explained in further detail below with respect to FIG. 2A.

In some embodiments, generating quantum circuits representations instead of a quantum circuit may increase the efficiency of designing quantum circuits. For example, a quantum circuit when represented as a directed graph may be more easily adjusted than a quantum circuit in a standard representation. For example, the elements of a quantum circuit, such as qubits and qubit operations, may be represented by nodes, self-loops, and/or edges of a directed graph. In these and other embodiments, nodes, self-loops, and edges of a directed graph may be more easily represented and manipulated than a standard quantum circuit. More easily representing and manipulating quantum circuits may aid the quantum circuit generation system 120 in determining candidate quantum circuit designs for a particular task. As discussed in this disclosure, the quantum circuit generation system 120 may generate or adjust multiple candidate quantum circuit designs in determining a final quantum circuit design. When the number of quantum circuit designs generated or adjusted is large, using a structure that more easily represents quantum circuits and is more easily manipulated reduces the burden on the quantum circuit generation system 120. For example, to adjust a quantum circuit design to add a qubit in a design and how the qubit interacts with other qubits may be difficult to represent in a standard quantum design. However, in a directed graph, the addition of a qubit may be easily represented by a node and the interactions by adding edges with other nodes and self-loops. Thus, adding or deleting qubits and/or operations may be simplified by using quantum circuit representations.

In some embodiments, the final quantum circuit design selected by the quantum circuit generation system 120 may be implemented as the quantum circuit 108 in the quantum hardware 106, by the quantum circuit generation system 120. Implementing the quantum circuit 108 may include configuring, executing, and/or simulating one or more single qubit and/or multi-qubit operations using the quantum hardware 106. For example, implementing the quantum circuit 108 may include applying a sequence of quantum logic gates in the quantum circuit 108 using laser pulses, magnetic fields, electric fields, microwaves, etc., to manipulate the quantum state of the qubits in the quantum circuit 108. In some embodiments, implementing the quantum circuit 108 may include inputting the final quantum circuit design into a quantum processor included in the quantum hardware 106 (e.g., using an application programming interface). In these and other embodiments, the quantum hardware 106 may be configured to transform the quantum circuit 108 into a machine-executable format (e.g., using a quantum circuit compiler to convert high-level quantum circuit language into low-level assembly language and/or hardware description language).

In some embodiments, the quantum hardware 106 may include a quantum processor that includes one or more qubits and an ability to store the qubits. In some embodiments, the qubits may be physically implemented using, for example, photons, trapped ions, electrons, one or more nuclei, superconductor circuits, and/or quantum dots. For example, the qubits may be physically implemented in a variety of ways including the polarization state of a single photon, the spatial optical path of a single photon, two differing energy states of an atom or an ion, and/or the spin orientation of a particle or multiple particles, such as a nucleus. In some embodiments, the quantum processor may comprise at least two qubits and at least one coupler capable of coupling the qubits. Storing the qubits may include maintaining the qubits in a suitable environment to allow quantum computation, for example by supercooling the qubits. In some embodiments, the quantum hardware 106 may be included in a NISQ device such as a quantum annealer or in any other type of quantum computing device.

In some embodiments, the quantum circuit 108 may be configured to obtain data 110. In these and other embodiments, the data 110 may include a compilation of data that may include multiple different data entries and may be arranged in multiple different configurations. In some embodiments, the data 110 may include numerical data, and/or character strings (e.g., including letters, symbols, and/or other characters), which may include Boolean data, date and time data, binary data, categorical data, and/or any other type of data. In some embodiments, the data 110 may include or represent biological/medical/pharmacological data, technological data, financial/business data, and/or any other type of data. In some embodiments, the data 110 may relate to a task for which the quantum circuit 108 is configured. For example, with respect to the task of financial portfolio optimization, the data 110 may include stock market performance data. In some embodiments, the data 110 may include image data. For example, the data 110 may include photographs (e.g., images obtained by cameras, such as cameras included in smartphones, including images of people, locations, animals, etc.). Additionally or alternatively, the data 110 may include medical image data (e.g., images obtained by medical devices such as Magnetic Resonance Imaging (MRI) scanners, X-ray machines, etc., including images of patients and/or biological structures); aerial image data (e.g., images obtained by satellites and/or drones including images of weather patterns, urban mapping, etc.); astronomical images (e.g., images obtained by telescopes including images of galaxies, planets, nebulae, etc.); and/or any other type of image data.

In some embodiments, the quantum circuit 108 may be configured to generate an output 112 by providing the data 110 to the quantum hardware 106 configured according to the quantum circuit 108. For example, the quantum circuit 108 may be configured for quantum data compression. In these and other embodiments, the data 110 provided to the quantum hardware 106 may be compressed and the compressed data may be the output 112 generated by the quantum hardware 106. For example, the output 112 may include a compressed quantum data representation (e.g., compressing data originally in a 4-qubit state representation into a 2-qubit state representation). In some embodiments, the output 112 may include information in a quantum state that has been compressed into a lower dimensional quantum state with high fidelity (e.g., greater than 50% fidelity, greater than 75% fidelity, greater than 90% fidelity, greater than 95% fidelity, or greater than 99% fidelity). In some embodiments, the compression of information in a quantum state into a lower dimensional quantum state with high fidelity may allow for larger-sized problems to be solved using quantum computing devices.

Modifications, additions, or omissions may be made to the environment 100 without departing from the scope of the disclosure. For example, the designations of different elements in the manner described is meant to help explain concepts described herein and is not limiting. For instance, in some embodiments, the environment 100 may be delineated in the specific manner described to help with explaining concepts described herein, but such delineation is not meant to be limiting. Further, the environment 100 may include any number of other elements or may be implemented within other systems or contexts than those described.

FIG. 2A illustrates an example directed graph 200. In some embodiments, the directed graph 200 may be an example of a quantum circuit representation that may be used by the quantum circuit generation system 120 of FIG. 1. For example, the directed graph 200 may include one or more nodes 202a, 202b, 202c, and 202d (nodes 202), which may represent qubits in a quantum circuit. In these and other embodiments, the directed graph 200 may include one or more self-loops 204a, 204b, 204c, 204d (self-loops 204), which may represent single qubit operations that may be performed on a quantum circuit. For example, a single qubit operation may be an operation performed by a single qubit quantum logic gate (e.g., Hadamard gate, Pauli gate, phase-shift gate, etc.). In some embodiments, the directed graph 200 may include one or more edges 206a, 206b, 206c, 206d (edges 206) between two nodes, which may represent multi-qubit operations. For example, a multi-qubit operation may be an operation performed by a CNOT gate, Toffoli gate, SWAP gate, etc.

In some embodiments, the directed graph 200 may be an improvement over other types of intermediate representations used for quantum circuit design. For example, Directed Acyclic Graphs (DAGs) may be intermediate representations used for quantum circuit design. DAGs may include an acyclic restriction such that only connectivity of operations may be adjusted (e.g., via adjusting the values of nodes in the DAG). In some embodiments, the directed graph 200 may be configured without an acyclic restriction such that adjusting operations in the directed graph 200 may be performed by adjusting one or more of the self-loops 204 and/or edges 206, which may allow for sequence of operations to be determined in addition to connectivity. In some embodiments, the directed graph 200 may facilitate modeling, transforming, and/or analyzing quantum circuit designs.

FIG. 2B illustrates an example quantum circuit 210. In some embodiments, the quantum circuit 210 may correspond to the directed graph 200 in FIG. 2A. For example, node 202a in the directed graph 200 in FIG. 2A may correspond to qubit 212a in the quantum circuit 210 in FIG. 2B. Additionally or alternatively, node 202b may correspond to qubit 212b, node 202c may correspond to qubit 212c, and/or node 202d may correspond to qubit 212d.In some embodiments, self-loop 204a may correspond to single qubit operation 214a, self-loop 204b may correspond to single qubit operation 214b, self-loop 204c may correspond to single qubit operation 214c, and/or self-loop 204d may correspond to single qubit operation 214d (collectively single qubit operations 214).Additionally or alternatively, edge 206a may correspond to multi-qubit operation 216a, edge 206b may correspond to multi-qubit operation 216b, edge 206c may correspond to multi-qubit operation 216c, and/or edge 206d may correspond to multi-qubit operation 216d (collectively multi-qubit operations 216).

In some embodiments, the self-loops 204 and/or the edges 206 in the directed graph 200 of FIG. 2A may include weights that may indicate an ordered sequence of single qubit operations 214 and/or multi-qubit operations 216, respectively, that may exist in the corresponding quantum circuit 210 of FIG. 2B. In some embodiments, the weights may be numerical parameters such as angles, probabilities, and/or amplitudes that may adjust the single qubit operations 214 and/or multi-qubit operations 216. For example, rotation angles may be weights that determine the extent a qubit may be rotated around a designated idealized axis (e.g., in the Bloch sphere, a geometrical representation of a qubit). As an additional example, each of the different types of multi-qubit operations 216 may be assigned a different number. The weight may equal a number and correspond to a multi-qubit operation. For example, a CNOT operation between nodes, e.g. qubits, may be represented as a weight over the edge connecting node 0 and node 1 in the directed graph 200. The weights may be a multi-dimensional weight vector to represent multi-operations between the nodes. For example, for two operations between nodes, the weight may be a weight vector of two, with a weight corresponding to each of the two operations.

Modifications, additions, or omissions may be made to the directed graph 200 and/or the quantum circuit 210 without departing from the scope of the disclosure. For example, the designations of different elements in the manner described is meant to help explain concepts described herein and is not limiting. For instance, in some embodiments, the directed graph 200 and/or the quantum circuit 210 may be delineated in the specific manner described to help with explaining concepts described herein, but such delineation is not meant to be limiting. Further, the directed graph 200 and/or the quantum circuit 210 may include any number of other elements or may be implemented within other systems or contexts than those described.

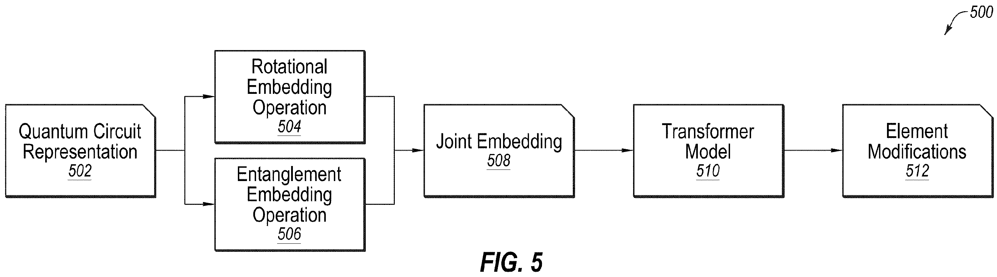

FIG. 3 illustrates an example method 300 of quantum circuit design, according to one or more embodiments of the present disclosure. The method 300 may be performed by any suitable system, apparatus, or device. For example, the quantum circuit generation system 120, quantum hardware 106, and/or quantum circuit 108 described with respect to FIG. 1 and/or the transformer model 510 described with respect to FIG. 5 may perform one or more of the operations associated with the method 300. Although illustrated with discrete blocks, the steps and operations associated with one or more of the blocks of the method 300 may be divided into additional blocks, combined into fewer blocks, or eliminated, depending on the particular implementation.

In some embodiments, the method 300 may include using a directed graph selected from a first set of directed graphs (e.g., the best directed graph) to generate a second set of directed graphs, where the directed graphs each represent a quantum circuit. In these and other embodiments, the second set of directed graphs generated based on a base directed graph from the first set of directed graphs may correspond to quantum circuits better configured to handle a given task compared to the quantum circuits corresponding to the first set of directed graphs.

In some embodiments, the method 300 may begin at block 302 with setting a constraint with a first value. For example, the first value may be set to 1, 2, 3, etc. In some embodiments, the first value may be any value corresponding to use of available quantum computing resources corresponding to the constraint. In some embodiments, the constraint may correspond to a quantum circuit depth, the number of parameters included in a quantum circuit, the number of qubits included in a quantum circuit, and/or any other quantum circuit parameter. For example, the constraint being set to a first value of 4 may correspond to the method 300 being performed with the maximum number of qubits in the quantum circuit being 4 qubits.

At block 304, the method 300 may include generating multiple candidate quantum circuit designs based on the constraint. In these and other embodiments, the candidate quantum circuit designs may be candidate intermediate representations designs such as described with respect to FIG. 2A and 2B.

To generate the multiple candidate quantum circuit designs, a number of qubits and operations that may be performed on the qubits may be considered. For example, single qubit operations including parameterized operations (e.g., rotation gates *R_{X,Y,Z},* controlled rotation gates *CR_{X,Y,Z},* etc.) and/or non-parameterized operations (e.g., Pauli gates *σ_{x,y,z}*)*,* among other types of single qubit operations may be considered. As another example, multi-qubit operations including CNOT gates, Toffoli gates, SWAP gates, bell state gates, and/or controlled U gates, among other types of multi-qubit operations may be considered. The multiple candidate quantum circuit designs may be generated given the number of qubits and the operations to be considered based on the constraint.

For example, in response to the constraint corresponding to a number of layers of the quantum circuit design and the constraint being set at a first value of two such that the quantum circuit design may have one layer or two layers, all possible or a subset of possible candidate quantum circuit designs that are possible given the number of qubits, the operations to be considered, and the constraint may be generated. In some embodiments, generating the multiple candidate quantum circuit designs may be performed by a computing device.

In some embodiments, the method 300 may include a first iteration where the search space of quantum circuit designs includes all possible or a subset of all possible quantum circuit operations and quantum circuit parameters given the constraint. In some embodiments, the method 300 may include a second iteration and/or additional iterations where, in response to adjusting the value of the constraint at block 312, the method 300 may return to block 304. Before returning to block 304, one of the candidate quantum circuit designs generated in the previous iteration in block 304 may be selected. The selected candidate quantum circuit design may be the base design for constructing additional candidate quantum circuit designs in the next iteration of block 304. A selected candidate quantum circuit design being a base design may include the additional candidate quantum circuit designs starting with the selected candidate quantum circuit design and adding additional components to the selected candidate quantum circuit design given the constraint during the current iteration of the block 304. In some embodiments, block 304 may be followed with block 306.

At block 306, the method 300 may include evaluating the multiple quantum circuit designs. In some embodiments, evaluating the multiple quantum circuit designs may include implementing the multiple quantum circuit designs as quantum circuits and determining how well each quantum circuit performs with respect to a selected metric. In some embodiments, implementing each of the multiple quantum circuit designs as a quantum circuit may include using a quantum compiler to convert the quantum circuit designs into a format such that quantum hardware (e.g., a Quantum Processing Unit) may be used to configure, execute, and/or simulate one or more single qubit and/or multi-qubit operations to obtain an output. In some embodiments, the output may be transformed data and/or a solution. For example, a quantum circuit design may be configured to obtain an output of compressed data when implemented as a quantum circuit and provided with an input of data. In some embodiments, determining how well each quantum circuit performs with respect to a selected metric may include measuring fidelity (e.g., a measure of how similar the output is to the input) and/or accuracy (e.g., a measure of how similar the output is to a known or expected solution, such as from implementing the quantum circuit with test data). In some embodiments, fidelity, accuracy, and/or any other metric may include measurements of mean squared error, peak signal-to-noise ratio, and/or any other distortion measure.

In some embodiments, evaluating the multiple quantum circuit designs may include generating a specified number of quantum circuit designs and then converting the intermediate representations as a group into quantum circuits to test on the given metric. In these and other embodiments, waiting to convert into quantum circuits and test on the given metric until after a specified number of intermediate representations have been generated may improve quantum circuit design by consuming less computing memory and/or reducing completion time because only one type of data (e.g., either the quantum circuit design or the implementable (e.g., compiled) quantum circuit) is stored at any given time point. In some embodiments, block 306 may be followed with block 308.

At block 308, the method 300 may include selecting one of the multiple quantum circuit designs. In some embodiments, the selecting may be based on how each quantum circuit design performs with respect to a given metric. For example, the given metric may be ability to compress data with fidelity such that the selected quantum circuit design may be able to compress data with the greatest degree of fidelity compared to the quantum circuits corresponding to the other candidate quantum circuit designs generated (e.g., the quantum circuit design with the best performance may be selected) . In some embodiments, block 308 may be followed with block 310.

At block 310, the method 300 may include determining whether the constraint is less than a threshold. In some embodiments, the threshold may be a limit on the values to which the constraint may be set. For example, the threshold may be five layers such that the constraint may be set to one layer, two layers, three layers, four layers, or five layers. In some embodiments, the constraint being less than the threshold may indicate that the quantum circuit corresponding to the selected one of the multiple quantum circuit designs has not met and/or exceeded the use of available quantum computing resources. In response to the constraint being less than the threshold, the method 300 may proceed to block 312.

At block 312, in response to the constraint (e.g., when set at the first value) being less than the threshold, the method 300 may include adjusting the value of the constraint. In some embodiments, adjusting the value of the constraint may include incrementally increasing or decreasing the value of the constraint. Additionally or alternatively, adjusting the value of the constraint may include making the method 300 into an iterative process. For example, where the threshold is two (e.g., two layers), the constraint may initially be set with a first value of one (e.g., one layer) such that at block 310, the method 300 may proceed to block 312 because one is less than two, and at block 312, the constraint may be adjusted to have the value two, after which the method 300 may again proceed to block 304, block 306, block 308, and/or block 310 (e.g., in an iterative manner). In some embodiments, the method 300 may iterate until the constraint is equal to or greater than the threshold. In response to the constraint being equal to or greater than the threshold, the method 300 may proceed to block 314.

At block 314, in response to the constraint being equal to or greater than the threshold, the method 300 may include outputting one or more of the selected quantum circuit designs. In some embodiments, the selected quantum circuit designs may be evaluated compared to each of the other selected quantum circuit designs (e.g., using the evaluations obtained at block 306) to determine a best quantum circuit design of the selected quantum circuit designs, which may then be outputted. In some embodiments, outputting one or more of the selected quantum circuit designs may include converting one or more of the selected quantum circuit designs into quantum circuits (e.g., using a quantum compiler).

An example of the operation of the method 300 is now provided. During a first iteration of the method 300, the constraint may include the number of qubits in the candidate quantum circuit design and the value of the constraint may be two. In these and other embodiments, multiple candidate quantum circuit designs may be generated in the first iteration of block 304. The multiple candidate quantum circuit designs may be evaluated at block 306 and one of the multiple candidate quantum circuit design may be selected as the selected candidate quantum circuit design in block 308. The threshold may be six and thus the method 300 may proceed to block 312 and the value of the constraint may be increased to three.

During a second iteration at block 304, multiple candidate quantum circuit designs may be generated using the selected candidate quantum circuit design as a base. For example, the selected candidate quantum circuit design may include two qubits, three single qubit operations, and two multi-qubit operations. During the second iteration at block 304, each of the candidate quantum circuit designs may include the design of the selected candidate quantum circuit design as a beginning design to generate the multiple candidate quantum circuit designs during the second iteration. For example, during the second iteration, to generate each of the multiple candidate quantum circuit designs, the generation process may start with the selected candidate quantum circuit design and may add an additional qubit and/or qubit operations. For example, the generation process during the second iteration may add a single qubit operation to a qubit added during the second iteration generation process or to the existing qubits from the selected candidate quantum circuit design. As another example, the generation process during the second iteration may add a multi-qubit operation between a qubit added during the second iteration generation process and an existing qubit or between existing qubits from the selected candidate quantum circuit design. As a result, after the second iteration generation process, each of the multiple candidate quantum circuit designs from the second iteration may include the selected candidate quantum circuit design from the first iteration.

The method 300 may continue iterating such that the candidate quantum circuit designs generated for each iteration at block 304 may include the selected candidate quantum circuit design from the previous generation as a base design. Furthermore, given that the selected candidate quantum circuit design from an iteration is used as the base design for the next iteration without changes, the candidate quantum circuit designs from the last iteration may include the selected candidate quantum circuit designs from each of the iterations of the method 300. Thus, the method 300 may work to generate the candidate quantum circuit designs for a current iteration by building upon the previously selected candidate quantum circuit designs from all the previous iterations. By incorporating the previously selected candidate quantum circuit designs, the design space considered during block 304 may be reduced, which may reduce the number of candidate quantum circuit designs generated.

Modifications, additions, or omissions may be made to the method 300 without departing from the scope of the disclosure. For example, the designations of different elements in the manner described is meant to help explain concepts described herein and is not limiting. For instance, in some embodiments, the method 300 may be delineated in the specific manner described to help with explaining concepts described herein, but such delineation is not meant to be limiting. Further, the method 300 may include any number of other elements or may be implemented within other systems or contexts than those described.

FIG. 4 illustrates an example method 400 of quantum circuit design, according to one or more embodiments of the present disclosure. The method 400 may be performed by any suitable system, apparatus, or device. For example, the quantum circuit generation system 120, quantum hardware 106, and/or quantum circuit 108 described with respect to FIG. 1 and/or the transformer model 510 described with respect to FIG. 5 may perform one or more of the operations associated with the method 400. Although illustrated with discrete blocks, the steps and operations associated with one or more of the blocks of the method 400 may be divided into additional blocks, combined into fewer blocks, or eliminated, depending on the particular implementation. In some embodiments, the method 400 may be configured to incorporate one or more aspects of a reinforcement learning method and/or an evolutionary search method.

In some embodiments, the method 400 may begin at block 402, a first set of candidate quantum circuit designs may be obtained. In some embodiments, the first set of quantum circuit designs may be randomly generated. In some embodiments, the first set of quantum circuit designs may include a selected quantum circuit design generated by the method 300 such as described with respect to block 314 in FIG. 3.

In some embodiments, the method 400 at block 404, a quantum circuit design from the first set of quantum circuit designs may be selected based on an evaluation. In some embodiments, the evaluation may include an ability to perform a task (e.g., compress data, denoise data, solve an optimization problem, encrypt data, simulate a chemical reaction, etc.). In these and other embodiments, the selected quantum circuit design may be the quantum circuit design determined to correspond to the quantum circuit that best performs the task compared to the other quantum circuits corresponding to the other quantum circuit designs in the first set of quantum circuit designs. In some embodiments, the evaluation may be similar to the evaluation performed by block 306 of FIG. 3.

At block 406, the method 400 may include transforming the selected quantum circuit design using an algorithm. In some embodiments, transforming the selected quantum circuit design may include adjusting one or more single qubit operations and/or multi-qubit operations (e.g., quantum logic gates) within the quantum circuit design. In some embodiments, adjusting may include replacing, adding, eliminating, duplicating, and/or otherwise altering which single qubit and/or multi-qubit operations are included in the quantum circuit. For example, the algorithm may be configured to replace a multi-qubit operation with a single qubit operation, which may reduce noise in corresponding quantum circuit. Additionally or alternatively, adjusting may include modifying the order in which the operations are implemented (e.g., by adjusting one or more weights corresponding to the qubit operations). In some embodiments, the transformation may be determined by a machine learning model such as a neural network. For example, the transformation may be determined by a transformer model, such as the transformer model 510 described in further detail with respect to FIG. 5.

At block 408, the method 400 may include updating the algorithm based on the transformation. In some embodiments, updating the algorithm may include adjusting one or more parameters of the algorithm. In some embodiments, adjusting one or more parameters of the algorithm may include training the algorithm (e.g., over multiple iterations) based on transforming the selected quantum circuit design. In these and other embodiments, the transformation of the selected quantum circuit design may be evaluated to determine if the transformation resulted in a better quantum circuit design. Based on the evaluation, the algorithm may be updated to allow the algorithm to generate quantum circuit designs better suited to perform a task compared to the originally selected quantum circuit designs. To update the algorithm, the algorithm may use a policy gradient algorithm configured to learn a policy by adjusting its parameters in a direction that maximizes a reward function. In some embodiments, the reward function corresponding to method 400 may be based on Expression 1 below.$R \left(τ\right) = \left\{\begin{matrix}{f}_{1} - {f}_{2} & if {f}_{1} > {f}_{2} \\ tan \left({f}_{2}\frac{π}{2}\right) & otherwise\end{matrix}\right.$

In these and other embodiments, *f*₁ may correspond to the performance of the selected quantum circuit design on a metric and/or *f*₂ may correspond to the performance of the transformed quantum circuit design on the metric. In some embodiments, the reward function may encourage the algorithm to generate one or more additional quantum circuit designs that perform better than the selected quantum circuit design.

At block 410, the method 400 may include replacing another quantum circuit design with the transformed quantum circuit design. In some embodiments, the other quantum circuit design (e.g., another quantum circuit design) may be from the first set of quantum circuit designs. In these and other embodiments, the other quantum circuit design that is replaced may be the quantum circuit design in the first set of quantum circuit designs that performs the worst at a task given a specific metric. In some embodiments, replacing the another quantum circuit design with the transformed quantum circuit design may improve the first set of quantum circuit designs (e.g., may make the quantum circuits that correspond to the quantum circuit designs better at performing a task when compared to the first set of quantum circuit designs).

At block 412, the method 400 may include determining whether an iterative threshold has been satisfied. In some embodiments, the iterative threshold may be based on available quantum computing device resources. Additionally or alternatively, the iterative threshold may be based on user input and/or completion time limitations. For example, a user may designate that the method 400 will iterate based on block 404, block 406, block 408, block 410, and/or block 412 until a specified number of epochs have been completed. In some embodiments, determining whether the iterative threshold has been reached may include comparing utilized resources with available resources. In response to the iterative threshold not being reached, the method 400 may iterate by proceeding to block 404.

In some embodiments, proceeding to block 404 from block 412 may be different than proceeding to block 404 from block 402 in that at block 404 following block 412, the first set of quantum circuit designs may include the transformed quantum circuit design as a replacement for one of the other quantum circuit designs. In these and other embodiments, in response to the iterative threshold not being satisfied at block 412, the selecting a quantum circuit design from the first set of quantum circuit designs based on an evaluation may result in the first set of quantum circuit designs improving over time. For example, the worst performing quantum circuit design may be replaced by a transformed version of the best performing quantum circuit design in each iteration. As a result, iterating the method 400 may result in iteratively improving the first set of quantum circuit designs as well as improving the algorithm to transform the first set of quantum circuit designs. As a result, the first set of quantum circuit designs may be further transformed using the adjusted algorithm in an iterative fashion as the algorithm learns how to transform the first set of quantum circuit designs for the quantum algorithm represented by the first set of quantum circuit designs. Thus, both the algorithm and the first set of quantum circuit designs may improve together to achieve increase the likelihood of determining an improved quantum circuit design.

At block 414, in response to the iterative threshold being reached, the method 400 may include outputting one or more quantum circuit representations. In some embodiments, the quantum circuit representations may be quantum circuit designs (e.g., encoded information that when implemented by a quantum computing device becomes a quantum circuit with a specific arrangement of single qubit and/or multi qubit operations). In some embodiments, outputting the one or more quantum circuit representations may include providing the one or more quantum circuit representations to a quantum computing device for implementation and/or to a machine learning model for additional training.

Modifications, additions, or omissions may be made to the method 400 without departing from the scope of the disclosure. For example, the designations of different elements in the manner described is meant to help explain concepts described herein and is not limiting. For instance, in some embodiments, the method 400 may be delineated in the specific manner described to help with explaining concepts described herein, but such delineation is not meant to be limiting. Further, the method 400 may include any number of other elements or may be implemented within other systems or contexts than those described.

FIG. 5 is an example operational flow 500 of quantum circuit design encoding where element modifications 512 are generated using a quantum circuit representation 502. In some embodiments, the quantum circuit representation 502 may be an intermediate representation such as a directed graph configured to represent a corresponding quantum circuit. In some embodiments, a rotational embedding operation 504 and/or an entanglement embedding operation 506 may be applied to the quantum circuit representation 502. In some embodiments, the rotational embedding operation 504 may include an operation that encodes one or more single qubit operations (e.g., rotational gates) into a vectorized representation (e.g., an embedding) that may be implemented by quantum hardware. In some embodiments, the entanglement embedding operation 506 may include an operation that encodes one or more multi-qubit operations (e.g., entanglement gates) into a vectorized representation that may be implemented by quantum hardware. For example, the rotational embedding operation 504 and/or the entanglement embedding operation 506 may be a quantum circuit compiling operation (e.g., gate synthesis).

In some embodiments, the rotational embedding operation 504 and/or the entanglement embedding operation 506 may be used to generate joint embeddings 508. In some embodiments, the joint embeddings 508 may include encoded data from the intermediate representations 502. For example, the joint embeddings 508 may be a vectorized representation of the single qubit operations and multi-qubit operations represented in the quantum circuit representations 502.

In some embodiments, the joint embeddings 508 may be obtained by a transformer model 510. In these and other embodiments, the transformer model 510 may be configured to generate element modifications 512 from the joint embeddings 508. In some embodiments, the element modifications 512 may be used in transforming a quantum circuit representation 502 such as transforming a selected quantum circuit design as described with respect to block 406 in FIG. 4. For example, the element modifications 512 may include adjustments to one or more of the single qubit and/or multi-qubit operations in the quantum circuit representation. For example, the adjustments may include replacing, adding, eliminating, duplicating, and/or otherwise altering which single qubit and/or multi-qubit operations are included in the quantum circuit. Additionally or alternatively, the adjustments may include modifying the order in which the operations are implemented (e.g., by adjusting one or more weights corresponding to the qubit operations).

Modifications, additions, or omissions may be made to the operational flow 500 without departing from the scope of the disclosure. For example, the designations of different elements in the manner described is meant to help explain concepts described herein and is not limiting. For instance, in some embodiments, the operational flow 500 may be delineated in the specific manner described to help with explaining concepts described herein, but such delineation is not meant to be limiting. Further, the operational flow 500 may include any number of other elements or may be implemented within other systems or contexts than those described.

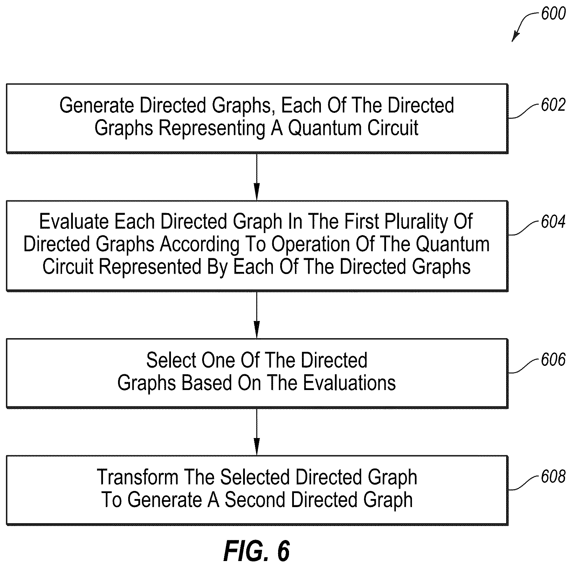

FIG. 6 is a flowchart of an example method 600 of quantum circuit search, according to one or more embodiments of the present disclosure. The method 600 may be performed by any suitable system, apparatus, or device. For example, the quantum circuit generation system 100, quantum hardware 106, and/or quantum circuit 108 described with respect to FIG. 1 and/or the transformer model 510 described with respect to FIG. 5 may perform one or more of the operations associated with the method 600. Although illustrated with discrete blocks, the steps and operations associated with one or more of the blocks of the method 600 may be divided into additional blocks, combined into fewer blocks, or eliminated, depending on the particular implementation.

The method 600 may begin at block 602, where directed graphs may be generated. In some embodiments, each directed graph may represent a quantum circuit. In some embodiments, each directed graph may be a quantum circuit representation where a self-loop indicates a single qubit operation and an edge indicates a multi-qubit operation.

At block 604, each of the directed graphs may be evaluated according to operation of the quantum circuit represented by each of the directed graphs. In some embodiments, the evaluations may be based on ability of the quantum circuit to perform a task using one or more qubit operations (e.g., single qubit operations and/or multi-qubit operations).

At block 606, one of the directed graphs may be selected based on the evaluations.

At block 608, the selected directed graph may be transformed to generate a second directed graph. In some embodiments, generating the second directed graph may include obtaining a vectorized representation based on one or more qubit operations of the selected directed graph, transforming the vectorized representation using a transformer model to obtain an adjustment to the one or more qubit operations, and/or applying the adjustment to the selected directed graph.

Modifications, additions, or omissions may be made to the method 600 without departing from the scope of the disclosure. For example, the designations of different elements in the manner described is meant to help explain concepts described herein and is not limiting. Further, the method 600 may include any number of other elements or may be implemented within other systems or contexts than those described. For example, the method 600 may include, generating a third set of directed graphs using the second directed graph as a base graph for each of the directed graphs in the third set of directed graphs, evaluating each directed graph in the third set of directed graphs according to operation of the quantum circuit represented by each of the directed graphs in the third set of directed graphs, selecting one of the directed graphs in the third set of directed graphs based on the evaluations, and/or transforming the selected directed graph to generate a fourth directed graph. In some embodiments, the method 600 may further include generating an implementable quantum circuit from the second directed graph. For example, the implementable quantum circuit may be a quantum autoencoder configured to compress data.

FIG. 7 is an example computing system 700 according to one or more embodiments of the present disclosure. The computing system 700 may include a processor 702, a memory 704, a data storage 706, and/or a communication unit 708, which all may be communicatively coupled. For example, the quantum circuit generation system 100 of FIG. 1 may be implemented as a computing system consistent with the computing system 700.

Generally, the processor 702 may include any suitable special-purpose or general-purpose computer, computing entity, or processing device including various computer hardware or software modules and may be configured to execute instructions stored on any applicable computer-readable storage media. For example, the processor 702 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 7, it is understood that the processor 702 may include any number of processors distributed across any number of network or physical locations that are configured to perform individually or collectively any number of operations described in the present disclosure. In some embodiments, the processor 702 may interpret and/or execute program instructions and/or process data stored in the memory 704, the data storage 706, or the memory 704 and the data storage 706. In some embodiments, the processor 702 may fetch program instructions from the data storage 706 and load the program instructions into the memory 704.

After the program instructions are loaded into the memory 704, the processor 702 may execute the program instructions, such as instructions to cause the computing system 700 to perform some of the operations of the method 300 of FIG. 3, method 400 of FIG. 4, and/or method 600 of FIG. 6. For example, the computing system 700 may execute the program instructions to generate, evaluate, select, and/or transform.

The memory 704 and the data storage 706 may include computer-readable storage media or one or more computer-readable storage mediums for having computer-executable instructions or data structures stored thereon. Such computer-readable storage media may be any available media that may be accessed by a general-purpose or special-purpose computer, such as the processor 702. In some embodiments, the computing system 700 may or may not include either of the memory 704 and the data storage 706.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 702 to perform a particular operation or group of operations.

The communication unit 708 may include any component, device, system, or combination thereof that is configured to transmit or receive information over a network. In some embodiments, the communication unit 708 may communicate with other devices at other locations, the same location, or even other components within the same system. For example, the communication unit 708 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 708 may permit data to be exchanged with a network and/or any other devices or systems described in the present disclosure. For example, the communication unit 708 may allow the computing system 700 to communicate with other systems, such as computing devices and/or other networks.

One skilled in the art, after reviewing this disclosure, may recognize that modifications, additions, or omissions may be made to the computing system 700 without departing from the scope of the present disclosure. For example, the computing system 700 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and methods described herein are generally described as being implemented in software (stored on and/or executed by general purpose hardware), specific hardware implementations or a combination of software and specific hardware implementations are also possible and contemplated.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, it is understood that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art and are to be construed as being without limitation to such specifically recited examples and conditions. Although embodiments of the present disclosure have been described in detail, it should be understood that the various changes, substitutions, and alterations could be made hereto without departing from the spirit and scope of the present disclosure.

## Claims

1. A method, comprising:
generating a first plurality of directed graphs, each of the first plurality of directed graphs representing a quantum circuit;
evaluating each directed graph in the first plurality of directed graphs according to operation of the quantum circuit represented by each of the directed graphs in the first plurality of directed graphs;
selecting one of the directed graphs based on the evaluations; and
transforming the selected directed graph to generate a second directed graph.

2. The method of claim 1, wherein each directed graph is a quantum circuit representation where a self-loop indicates a single qubit operation and an edge indicates a multi-qubit operation.

3. The method of claim 1 or claim 2, wherein the evaluations are based on ability of the quantum circuit to perform a task using one or more qubit operations.

4. The method of any of claims 1 to 3, further comprising generating an implementable quantum circuit from the second directed graph, optionally wherein the implementable quantum circuit is a quantum autoencoder configured to compress data.

5. The method of any of claims 1 to 4, further comprising:
generating a third plurality of directed graphs using the second directed graph as a base graph for each of the third plurality of directed graphs, each of the third plurality of directed graphs representing a quantum circuit;
evaluating each directed graph in the third plurality of directed graphs according to operation of the quantum circuit represented by each of the directed graphs in the third plurality of directed graphs;
selecting one of the third plurality of directed graphs based on the evaluations; and
transforming the selected directed graph to generate a fourth directed graph.

6. The method of any of claims 1 to 5, wherein transforming the selected directed graph to generate a second directed graph includes:
obtaining a vectorized representation based on one or more qubit operations of the selected directed graph,
transforming the vectorized representation using a transformer model to obtain an adjustment to the one or more qubit operations, and
applying the adjustment to the selected directed graph.

7. A method, comprising:
generating a first plurality of directed graphs, each of the first plurality of directed graphs representing a quantum circuit configured according to a constraint, the constraint having a first value;
evaluating the first plurality of directed graphs;
selecting one of the first plurality of directed graphs based on the evaluations; and
generating a second plurality of directed graphs using the selected one of the first plurality of directed graphs as a base graph for each of the second plurality of directed graphs, each of the second plurality of directed graphs representing a quantum circuit configured according to the constraint where the constraint has a second value different from the first value.

8. The method of claim 7, wherein in the first plurality of directed graphs a self-loop indicates a single qubit operation and an edge indicates a multi-qubit operation.

9. The method of claim 7 or claim 8, wherein the constraint includes one or more of a quantum circuit depth, a number of quantum circuit parameters, and a number of qubits.

10. The method of any of claims 7 to 9, further comprising generating an implementable quantum circuit based on at least one directed graph of the second plurality of directed graphs, optionally wherein the implementable quantum circuit is a quantum autoencoder configured to compress data.

11. The method of any of claims 7 to 10, further comprising,
evaluating the second plurality of directed graphs;
selecting one of the second plurality of directed graphs based on the evaluations; and
generating a third plurality of directed graphs using the selected one of the second plurality of directed graphs as a base graph for each of the third plurality of directed graphs, each of the third plurality of directed graphs representing a quantum circuit configured according to the constraint where the constraint has a third value different from the first value and the second value.

12. The method of any of claims 7 to 11, further comprising:
evaluating a third plurality of directed graphs that are based on the second plurality of directed graphs;
selecting a first directed graph and a second directed graph from the third plurality of directed graphs according to the evaluations;
transforming the first directed graph; and
replacing the second directed graph with the transformed first directed graph in the third plurality of directed graphs, optionally wherein transforming the first directed graph comprises adjusting one or more elements of the first directed graph using element modifications obtained from a machine learning model, wherein the machine learning model is provided with the first directed graph and a criteria and is configured to:
obtain a vectorized representation based on one or more qubit operations of the first directed graph, and
transform the vectorized representation using a transformer model to obtain the element modifications.

13. A method, comprising:
obtaining a first set of quantum circuit representations that includes a first plurality of quantum circuit representations;
evaluating each of the first plurality of quantum circuit representations according to a first criterion;
selecting one of the first plurality of quantum circuit representations based on the evaluations;
adjusting one or more elements of the selected one of the first plurality of quantum circuit representations using element modifications obtained from a machine learning model that is provided the selected one of the first plurality of quantum circuit representations and the first criterion to obtain a first adjusted quantum circuit representation; and
replacing a second of the plurality of quantum circuit representations in the set of quantum circuit representations with the first adjusted quantum circuit representation to obtain a second set of quantum circuit representations with a second plurality of quantum circuit representations.

14. The method of claim 13, wherein the first plurality of quantum circuit representations are directed graphs where a self-loop indicates a single qubit operation and an edge indicates a multi-qubit operation.

15. The method of claim 13 or claim 14, wherein the first criterion includes an ability of each quantum circuit represented by the first set of quantum circuit representations to perform a task using one or more qubit operations.

16. The method of any of claims 13 to 15, further comprising:
adjusting the machine learning model based on the first adjusted quantum circuit representation;
evaluating each of the second plurality of quantum circuit representations in the second set of quantum circuit representations;
selecting one of the second plurality of quantum circuit representations based on the second evaluations;
adjusting one or more elements of the selected one of the second plurality of quantum circuit representations using element modifications obtained from the adjusted machine learning model; and
replacing a third quantum circuit representation in the second set of quantum circuit representations with the second adjusted quantum circuit representation to obtain a third set of quantum circuit representations with a third plurality of quantum circuit representations.

17. The method of any of claims 13 to 16, wherein each of the first plurality of quantum circuit representations is transformed into a vectorized representation based on one or more qubit operations, the machine learning model is a transformer model, and the element modifications include one or more additional qubit operations.
